# EUROPÄISCHE PATENTSCHRIFT

(11) **EP 3 694 745 B1**
(45) Veröffentlichungstag und Bekanntmachung des Hinweises auf die Patenterteilung: **15.06.2022**
(21) Anmeldenummer: 18788705.4
(22) Anmeldetag: 10.10.2018
(51) Int. Cl.: B60N 2/42, B60N 2/427

(54) **FAHRZEUG MIT EINEM INSASSENSCHUTZSYSTEM MIT EINEM IM FAHRZEUGINNENRAUM ZUR VERFÜGUNG STEHENDEN VERGRÖSSERTEN FREIRAUM**
VEHICLE WITH AN OCCUPANT PROTECTION SYSTEM HAVING AN ENLARGED FREE SPACE AVAILABLE IN THE INTERIOR OF THE VEHICLE
VEHICULE AVEC UN SYSTEME DE PROTECTION DES OCCUPANTS AYANT UN ESPACE LIBRE AGRANDI DISPONIBLE A L'INTERIEUR DU VEHICULE

(30) Priorität: 10.10.2017 DE 102017218024
(43) Veröffentlichungstag der Anmeldung: 19.08.2020
(73) Patentinhaber: Volkswagen Aktiengesellschaft, 38440 Wolfsburg (DE)
(72) Erfinder: SEIB, Eduard, 38444 Wolfsburg (DE); OKUPNIK, Thorsten, 38239 Salzgitter (DE); CORDES, Jürgen, 38108 Braunschweig (DE); MESCHKE, Jens, 38533 Vordorf (DE); SCHMÜCKER, Martin, 38110 Braunschweig (DE); WOHLLEBE, Thomas, 38547 Calberlah (DE); KURZ, Manuel, 38162 Cremlingen (DE); DRESCHER, Thomas, 38518 Gifhorn (DE)
(86) Internationale Anmeldenummer: PCT/EP2018/077629
(87) Internationale Veröffentlichungsnummer: WO 2019/072929

(56) Entgegenhaltungen:
- US-A1- 2001 040 065
- US-A1- 2002 147 535
- US-A1- 2008 036 185
- US-A1- 2016 243 963

## Beschreibung

Die Erfindung betrifft ein Fahrzeug mit einem im Fahrzeuginnenraum angeordneten Fahrzeugsitz, dem ein Insassenschutzsystem zugeordnet ist, welches mindestens eine Crasherkennungs-Sensorik aufweist, die im Crashfall mindestens einen Beschleunigungswert erfasst, der im Crashfall auf das Fahrzeug einwirkt, so dass in Abhängigkeit des erfassten Beschleunigungswertes auf den mit dem Fahrzeug verbundenen Fahrzeugsitz und auf den auf dem Fahrzeugsitz aufsitzenden Insassen Trägheitskräfte wirken, wobei der Beschleunigungswert zur crashadaptiven Vorgabe eines die Trägheitskräfte aufnehmenden Verlagerungsweges des mit einem Gurtsystem auf dem Fahrzeugsitz gesicherten Insassen über der Zeit dient.

Die Druckschrift DE 198 20 214 A1 beschreibt ein Verfahren zum Vermindern der Verletzungsschwere von Kraftfahrzeuginsassen bei einem Unfall. Die Insassen bewegen sich bei einer starken Fahrzeugverzögerung oder Fahrzeugbeschleunigung relativ zum Fahrzeug um eine begrenzte Wegstrecke gegen die Kraft einer Dämpfungseinrichtung. Dadurch, dass sich die Insassen bei einer starken Fahrzeugverzögerung relativ zum Fahrzeug um eine begrenzte Wegstrecke mit Dämpfung der Relativbewegung bewegen beziehungsweise verschieben können, wird zusätzlicher Abbremsweg gewonnen, der eine gleichmäßigere beziehungsweise schwächere Abbremsung ermöglicht, wodurch die Verletzungsgefahr verringert wird. Ein eventuell vorhandener Airbag kann "weicher" aufgeblasen werden oder muss erst gar nicht in Betrieb gesetzt werden. Ferner wird erläutert, dass der Fahrersitz über eine Befestigungseinrichtung an dem Fahrzeug befestigt ist, die eine begrenzte Verschiebbarkeit des Fahrzeugsitzes relativ zum Fahrgestell ermöglicht, wobei die Verschiebung gegen die Kraft einer Dämpfungseinrichtung erfolgt. Der gegen die Kraft einer Dämpfungseinrichtung relativ zum Fahrzeug verschiebbare Fahrersitz kann unmittelbar an einem Fahrzeugrahmen beziehungsweise Fahrgestell angebracht sein oder innerhalb einer in sich steifen Fahrgastzelle, die selbst wiederum gegenüber dem Rahmen beweglich ist.

Die Druckschrift EP 2 546 097 A1 offenbart eine crashbedingte Sitzlängsverschiebung beziehungsweise Sitzverlagerung. Der Crashantrieb verwendet eine längsverschiebbare an einem Fahrzeugboden angeordnete Fahrzeugsitzschiene, damit im Crashfall eine definierte Verlagerung des gesamten Fahrzeugsitzes erfolgen kann, wodurch ein besserer Schutz vor Verletzungen aufgrund des so genannten Whiplash-Effektes erreicht wird.

Die Druckschrift DE 60 2005 001 224 T2 beschreibt eine Insassenschutzvorrichtung für ein Fahrzeug. Die Insassenschutzvorrichtung umfasst eine Hauptsteuerungseinheit als Steuerungsmittel, die einen Mikrocomputer und eine Logik-Schaltung enthält, und eine Aufprallfrühwarneinheit im Sinne eines Aufprallvorhersagemittels, die mit einem Millimeterwellen-Radar konfiguriert ist und mindestens eine Betriebseinheit enthält.

Die Druckschrift DE102015002116 beschreibt ein Verfahren und ein System zum Steuern eines Aktuators zum Aufprägen von Kräften auf eine Ladefläche, die verstellbar an einer Karosserie eines Kraftfahrzeugs gelagert ist, sowie ein Kraftfahrzeug mit dem System und ein Computerprogrammprodukt zur Durchführung des Verfahrens.

Die Aufprallfrühwarneinheit wird eingesetzt, um basierend auf einer Laufleistung bezüglich eines vorausliegenden Ziels und einer Fahrzeuggeschwindigkeit bezüglich eines vorausliegenden Ziels eine Möglichkeit oder andernfalls einen Fahrzeugaufprall vorherzusehen oder vorauszusagen. Die Betriebseinheiten sind konfiguriert als Betriebseinheit zum Betreiben einer Schiebedach-Vorrichtung, als Betriebseinheit zum Betreiben einer Seitenfenster-Vorrichtung, als Betriebseinheit zum Betreiben einer Sitzrückenlehnenverstellungs-Vorrichtung, als Betriebseinheit zum Betreiben einer Sitzverschiebungs-Vorrichtung, als Betriebseinheit zum Betreiben einer Sitzhöhenverstellungs-Vorrichtung, als Betriebseinheit zum Betreiben eines Pre-Crash-Sicherheitsgurtes. Jede Betriebseinheit empfängt über einen Kommunikationsbus Informationen über einen Fahrzeugaufprall, der durch die Aufprallfrühwarneinheit vorhergesehen wurde. Ein Steuerkreis der Insassenschutzvorrichtung ist derart ausgestaltet, dass die Betriebseinheiten in einer Weise betrieben werden, so dass jede der Vorrichtungen in einen Zustand gebracht wird, der geeignet ist, um die Fahrzeuginsassen zu schützen. Mit anderen Worten, es ist vorgesehen, vor einer Kollision verschiedene Aktionen durchzuführen, um den Insassen zu schützen. Unter anderen Maßnahmen werden prinzipiell gesehen veränderte Sitzeinstellungen, das heißt, es wird beispielsweise die Lehne verstellt und/oder der Fahrzeugsitz insgesamt längsverschoben.

Der Erfindung liegt die Aufgabe zugrunde, ein Insassenschutzsystem für ein Fahrzeug anzugeben, mit dem es möglich ist, die Verletzungen des Insassen im Falle eines Unfalls weitestgehend zu vermindern, wobei die im Unfall auf den Insassen wirkenden biomechanischen Belastungswerte minimiert werden sollen.

Ausgangspunkt der Erfindung ist ein Fahrzeug mit einem im Fahrzeuginnenraum angeordneten Fahrzeugsitz, dem ein Insassenschutzsystem zugeordnet ist, welches mindestens eine Crasherkennungs-Sensorik aufweist, die im Crashfall mindestens einen Beschleunigungswert erfasst, der im Crashfall auf das Fahrzeug einwirkt, so dass in Abhängigkeit des erfassten Beschleunigungswertes auf den mit dem Fahrzeug verbundenen Fahrzeugsitz und auf den auf dem Fahrzeugsitz aufsitzenden Insassen Trägheitskräfte wirken, wobei der Beschleunigungswert zur crashadaptiven Vorgabe eines die Trägheitskräfte aufnehmenden Verlagerungsweges des mit einem Gurtsystem auf dem Fahrzeugsitz gesicherten Insassen über der Zeit dient, wobei ein Gesamtverlagerungsweg des Fahrzeugsitzes in Fahrtrichtung einen sich in Fahrtrichtung an einen Verlagerungsweg des Fahrzeugsitzes zur Sitzlängsverstellung in einem Sitzschienensystem anschließenden zusätzlichen ausschließlich crashaktiven Verlagerungsweg umfasst, wobei der zusätzliche ausschließlich crashaktive Verlagerungsweg durch eine Vergrößerung des in Fahrtrichtung vor dem Fahrzeugsitz zur Verfügung stehenden Freiraumes im Fahrzeuginnenraum des Fahrzeuges bewirkt wird.

Erfindungsgemäß ist vorgesehen, dass sich der Fahrzeugsitz ausgehend von der vordersten Position des maximalen Verschiebeweges nach vorn, nach einer crashfallabhängigen Freigabe, um den ausschließlich crashaktiven Verlagerungsweg bis zu einer vordersten Maximalposition weiter nach vorn verschieben lässt, wobei der Fahrzeugsitz nach der crashfallabhängigen Freigabe aus dem Sitzschienensystem ausgeklinkt wird, wonach der Fahrzeugsitz in einer Führungseinrichtung um den zusätzlichen crashaktiven Verlagerungsweg über den maximalen Verschiebeweg hinaus verlagerbar ist.

Der Vorteil besteht darin, dass der Fahrzeugsitz im Crashfall weiter nach vorne verlagert werden kann als bisher, wodurch innerhalb des vergrößerten Verlagerungsweges pro Zeiteinheit über die Sitzanbindung des Fahrzeugsitzes eine Kraftaufnahme realisiert werden kann, die für die auf dem Fahrzeugsitz aufsitzende Person eine geringere Belastung darstellt. Die auf die Person (den Insassen) über das Gurtsystem übertragenen Kräfte können verringert werden, da zur Kraftaufnahme ein vergrößerter Verlagerungsweg zur Verfügung steht. Die auf die Person übertragenen Kräfte können somit nicht nur, um eine zu hohe Belastung zu vermeiden, begrenzt werden, sondern die Belastungsgrenze kann dadurch eingehalten werden, da die Kräfte über einen vergrößerten Verlagerungsweg pro Zeiteinheit derart verteilt werden können, dass die Belastungsgrenze erst gar nicht erreicht wird.

In bevorzugter Ausgestaltung der Erfindung wird die Vergrößerung des zusätzlichen in Fahrtrichtung vor dem Fahrzeugsitz zur Verfügung stehenden Freiraumes durch den Entfall eines Frontcrash-Airbagsystems in einer entgegen der Fahrtrichtung verkleinerten Armaturentafel des Fahrzeuges erreicht. Diese Lösung ergibt sich aus einem Grundgedanken, der darin besteht, dass in Zukunft beim autonomen Fahren von Fahrzeugen eine veränderte Sitzposition der Insassen vorliegen wird.

Es besteht die Möglichkeit, dass sich die Insassen, insbesondere der vorderen Sitzreihe, in einer Position befinden, in der die auf einem Fahrzeugsitz aufsitzenden Insassen durch Entrasten, Drehen und Verrasten des Fahrzeugsitzes zu den Insassen der hinteren Sitzreihe gedreht angeordnet sind. Mit anderen Worten, die Rückenpartie der in der vorderen Sitzreihe sitzenden Insassen ist zur Armaturentafel gerichtet. Insofern verlieren die derzeit herkömmlichen Airbagsysteme ihre auf den bisherigen Anwendungsfall ausgerichtete Funktion. Es ist somit notwendig, Insassenschutzsysteme zu entwickeln, die ohne die herkömmlichen Airbagsysteme auskommen. Durch einen solchen Wegfall ergibt sich in vorteilhafter Weise, dass im frontseitigen Armaturenbereich ein zusätzlicher Freiraum zur Verfügung steht, den sich das in dieser Patentanmeldung beschriebene Insassenschutzsystem zu Nutze macht.

Bevorzugt weist das Fahrzeug zumindest frontseitig crashaktive Strukturen auf, die den Beschleunigungswert reduzieren. Durch diese Maßnahme wird in vorteilhafter Weise dafür gesorgt, dass die über die Sitzanbindung aufzunehmenden Kräfte, die durch den Crash erzeugt werden, von vornherein durch die crashaktiven Strukturen reduziert werden.

Es ist vorgesehen, dass ein zur Verfügung stehender freier Verlagerungsweg innerhalb des Gesamtverlagerungsweges durch mindestens eine Innenraum-Sensorik erfasst wird, die den - wirklich - zur Verfügung stehenden Freiraum zwischen einer Vorderseite des Fahrzeugsitzes und der dem Fahrzeugsitz zugewandten Seite der Armaturentafel erfasst. In vorteilhafter Weise wird durch eine solche Innenraum-Sensorik sichergestellt, dass das Insassenschutzsystem nicht von einem theoretisch zur Verfügung stehenden maximalen Verlagerungsweg ausgeht, sondern dass der wirkliche zum Crashzeitpunkt real verfügbare freie Verlagerungsweg zur Ansteuerung des Insassenschutzsystems verwendet wird.

Bevorzugt ist ferner vorgesehen, dass die Crasherkennungs-Sensorik einen vor einem Crashzeitpunkt liegenden Unfall (Pre-Crash) vorhersagt und/oder einen zum Crashzeitpunkt stattfindenden Unfall erfasst, so dass der Fahrzeugsitz mit dem aufsitzenden Insassen um einen zur Sitzlängsverstellung und zur crashaktiven Verlagerung vorgesehenen Verlagerungsweg zu einem vor dem eigentlichen Crash liegenden Crashzeitpunkt entgegen der Fahrtrichtung gefahren wird, um den zum Crashzeitpunkt zur Verfügung stehenden Gesamtverlagerungsweg in Fahrtrichtung über die bereits genannten zur Verfügung stehenden Verlagerungswege hinaus noch um den weiteren Verlagerungsweg zu vergrößern. Diese Vorgehensweise hat mehrere Vorteile. Der erste Vorteil besteht darin, dass durch die Crasherkennung-Sensorik des Fahrzeuges ein in der Zukunft liegender Crashzeitpunkt vorhergesagt werden kann. Die Zeit zwischen dem Vorhersagezeitpunkt und dem Crashzeitpunkt wird in vorteilhafter Weise dazu benutzt, den Fahrzeugsitz entgegen der Fahrtrichtung zu verlagern. Diese Verlagerung kann in vorteilhafter Weise über die bereits vorhandene Sitzlängsverstelleinrichtung, insbesondere ein Sitzschienensystem, vorgenommen werden. Diese Sitzlängsverstelleinrichtung ist im normalen Betrieb nicht crashaktiv. Erst zu dem Vorhersagezeitpunkt wird die Sitzlängsverstelleinrichtung crashaktiv geschaltet, so dass der Fahrzeugsitz zur noch weiteren Vergrößerung des in Fahrtrichtung vorhandenen Gesamtverlagerungsweges entgegen der Fahrtrichtung bewegt wird.

Es ist in vorteilhafter Weise ebenfalls vorgesehen, dass der zur Verfügung stehende freie Verlagerungsweg innerhalb des Gesamtverlagerungsweges, der vor dem Crashzeitpunkt zum Vorhersagezeitpunkt entgegen der Fahrtrichtung durchgeführt wird, durch mindestens eine Innenraum-Sensorik erfasst wird, die den zur Verfügung stehenden Freiraum zwischen einer Rückseite des Fahrzeugsitzes und einem Objekt hinter dem Fahrzeugsitz erfasst. Der Vorteil besteht wiederum darin, dass der entgegen der Fahrtrichtung mögliche Betrag der Rückverlagerung des Fahrzeugsitzes durch die Innenraum-Sensorik in Abhängigkeit der real zum Zeitpunkt der Vorhersage liegenden Bedingungen im Sinne des zur Verfügung stehenden Freiraumes bestimmt wird.

Zudem weist das Insassenschutzsystem einen Fahrzeugsitz mit einer Sitzanbindung auf, die mindestens eine Kraftaufnahme-Komponente umfasst, welche die Trägheitskräfte innerhalb des Gesamtverlagerungsweges über der Zeit aufnimmt, wodurch der Fahrzeugsitz mit dem aufsitzenden Insassen innerhalb des Gesamtverlagerungsweges über der Zeit mit einer optimierten Verzögerung abgebremst wird. Als mindestens eine Kraftaufnahme-Komponente wird/werden beispielsweise ein Deformationselement und/oder ein Zugstab und/oder ein Torsionsstab vorgesehen, welche zwischen Fahrzeugsitz und Karosserie angeordnet ist. Bevorzugt ist vorgesehen, dass die mindestens eine Kraftaufnahme-Komponente innerhalb der Sitzschiene oder der Sitzstruktur angeordnet ist.

In vorteilhafter Weise wird durch den zum Crashzeitpunkt zur Verfügung stehenden erfindungsgemäß vergrößerten Gesamtverlagerungsweg des Fahrzeugsitzes in Fahrtrichtung gegenüber den herkömmlichen im Crashfall unbeweglichen Fahrzeugsitzen der Effekt erreicht, dass durch die mindestens eine Kraftaufnahme-Komponente innerhalb des vergrößerten Gesamtverlagerungsweges über der Zeit Trägheitskräfte aufgenommen werden, so dass die auf den Insassen wirkenden biomechanischen Belastungswerte reduziert werden.

Darüber hinaus wird der Effekt erreicht, dass die crashaktive Verlagerung des Fahrzeugsitzesan sich - über den Gesamtverlagerungsweg beziehungsweise den erfindungsgemäß vergrößerten Gesamtverlagerungsweg des Fahrzeugsitzes in Fahrtrichtung durch den crashbedingten veränderten Bewegungsablauf des auf dem Fahrzeugsitz aufsitzenden Insassen ebenfalls die auf den Insassen wirkenden biomechanischen Belastungswerte reduziert werden.

Insbesondere der veränderte Bewegungsablauf des Kopfes und der veränderte Bewegungsablauf der Beine beziehungsweise die Relativbewegung des Kopfes gegenüber den Beinen des Insassen führt dazu, dass es im Crashfall, insbesondere durch den erfindungsgemäß vergrößerten Gesamtverlagerungsweg des Fahrzeugsitzes in Fahrtrichtung, insbesondere in dem Fahrzeug ohne Airbag zu keinem Aufschlagen des Kopfes auf die Oberschenkel der Beine kommt, wodurch erreicht wird, dass die auf den Insassen wirkenden biomechanischen Belastungswerte reduziert werden.

Mithin wird im Crashfall mittels der mindestens einen Kraftaufnahme-Komponente die Absorption der Trägheitskräfte und mittels der Verschiebbarkeit des Fahrzeugsitzes insbesondere über den vergrößerten Gesamtverlagerungsweg des Fahrzeugsitzes in Fahrtrichtung ein die genannten Effekte kombinierender Gesamteffekt erreicht, der im besonderen Maße für einen verbesserten Schutz des Insassen im Fahrzeug, insbesondere in einem airbaglosen Fahrzeug, sorgt, wie in der Beschreibung näher erläutert ist.

Es ist auch vorgesehen, dass der Fahrzeugsitz eine Sitzanbindung aufweist, die mindestens eine Kraftabgabe-Komponente umfasst, welche Kräfte innerhalb des Gesamtverlagerungsweges über der Zeit abgibt, wodurch der Fahrzeugsitz mit dem aufsitzenden Insassen innerhalb des Gesamtverlagerungsweges über der Zeit mit einer optimierten Beschleunigung beschleunigt wird. Als mindestens eine Kraftabgabe-Komponente wird/werden beispielsweise ein Pyrotechniksystem und/oder ein Federsystem vorgesehen, welche zwischen Fahrzeugsitz und Karosserie angeordnet ist. Bevorzugt ist vorgesehen, dass die mindestens eine Kraftabgabe-Komponente innerhalb der Sitzschiene oder der Sitzstruktur angeordnet ist.

In vorteilhafter Weise kann die mindestens eine Kraftaufnahme-Komponente unter Beachtung der gegebenenfalls auftretenden Crashkräfte kompakt in die Sitzanbindung integriert werden, wobei auch vorgesehen werden kann, dass bei Bedarf nicht nur eine Abbremsung des Fahrzeugsitzes, sondern auch eine Beschleunigung durch die mindestens eine Kraftabgabe-Komponente des Fahrzeugsitzes realisierbar ist, um ein Nachvornenicken des Kopfes des Insassen zu verhindern.

Dabei ist vorgesehen, dass über die mindestens eine Kraftaufnahme-Komponente Kräfte aufgenommen werden, wobei die Kräfte innerhalb des erfassten Gesamtverlagerungsweges über der Zeit in bevorzugter Ausgestaltung der Erfindung in Abhängigkeit des erfassten Beschleunigungswertes durch Festlegung einer an den Beschleunigungswert und den erfassten Gesamtverlagerungsweg über der Zeit angepasste Kraft/Weg-Kennlinie aufgenommen werden.

In vorteilhafter Weise wird der Beschleunigungswert und der real zur Verfügung stehende Gesamtverlagerungsweg über der Zeit berücksichtigt, wodurch - je nachdem welcher Betrag für den Beschleunigungswertes erfasst worden ist und welcher Betrag für den Gesamtverlagerungsweg zur Verfügung steht - eine entsprechende Kraft/Weg-Kennlinie gewählt wird, um die Kräfte innerhalb der Sitzanbindung über die zur Verfügung stehende Kraftaufnahme-Komponente aufzunehmen.

Bevorzugt ist vorgesehen, dass die mindestens eine Kraftaufnahme-Komponente und/oder Kraftabgabe-Komponente individuell auf eine Masse des aufsitzenden Insassen abgestimmt ist, die mittels einer dem Fahrzeugsitz zugeordneten Gewichtserkennungssenorik ermittelt wird. Mit anderen Worten, es findet innerhalb der Ansteuerung des Insassenschutzsystems bevorzugt keine statische Gewichtsvorgabe statt, sondern es wird in vorteilhafter Weise stets die individuelle Masse des aufsitzenden Insassen berücksichtigt.

Im Fahrzeuginnenraum des Fahrzeuges ist entweder ein Fahrzeugsitz mit einem integrierten Gurtsystem (Gurtintegralsitz - erste Ausführungsform) angeordnet oder es ist ein Fahrzeugsitz angeordnet, der mit einem an einer B-Säule angeschlagenen Gurtsystem (Fahrzeugsitzzweite Ausführungsform in zwei Ausführungsvarianten) angeordnet ist.

Der Vorteil besteht darin, dass das beschriebene Insassenschutzsystem sowohl für Integralsitze als auch für Fahrzeugsitze mit an einer B-Säule angeschlagenen Gurtsystemen eingesetzt werden kann.

Außerdem wird erfindungsgemäß vorgeschlagen, dass der jeweilige Fahrzeugsitz einen Fangmechanismus für die Beine des Insassen umfasst. Diese erfindungsgemäße Idee basiert auf dem Gedanken, dass die Beine anders als der Oberkörper des Insassen nicht über das Gurtsystem an dem Fahrzeugsitz fixiert angeordnet sind. Gerade beim autonomen Fahren ist die Position des Insassen beziehungsweise die Position des Fahrzeugsitzes mit dem darauf angeordneten Insassen unbestimmt, so dass in einem Crashfall rotierende Bewegungen der Beine des Insassen auftreten können. Damit die Beine analog zum Oberkörper an dem Fahrzeugsitz eng anliegen, wird vorgeschlagen, die Beine mit einer fahrzeugsitzseitigen Schlaufe, insbesondere mit einer sich im Crashfall schließenden crashaktiven Schlaufe, zu sichern, die die Beine umgreift, oder zwischen den Beinen und dem Sitz einen Klettverschluss vorzusehen, so dass in beiden Ausführungsvarianten eine Bewegungen der Beine des Insassen vom Fahrzeugsitz weg vermieden wird.

Außerdem ist noch vorgesehen, dass ein Rückenlehnenteil des Fahrzeugsitzes des Fahrzeuges, insbesondere eines Drehsitzes, eine Kopfstütze aufweist, die den Kopf des Insassen mittels Kopfstützen-Seitenwangen crashaktiv umgreift, so dass der Kopf des Insassen im Crashfall bei seitlich gedrehtem Sitz nicht schleudern kann, wie in der Beschreibung näher erläutert ist. Es versteht sich, dass diese Kopfstützenausgestaltung auch für einen nicht drehbaren Fahrzeugsitz crashaktiv angewendet werden kann, da im Crashfall auch bei nicht drehbaren Fahrzeugsitzen Torsionsbewegungen des Kopfes gegenüber dem Torso des Insassen auftreten können.

In einer weiteren Ausgestaltung wird erfindungsgemäß vorgeschlagen, dass der jeweilige Fahrzeugsitz einen Fangmechanismus für die Arme und Hände des Insassen umfasst, so dass der Körper des Insassen (Beine und Arme) insgesamt durch mindestens ein Gurtsystem und entsprechende Fangmechanismen fest am Fahrzeugsitz gehalten wird.

Schließlich ist erfindungsgemäß noch vorgesehen, dass im Fahrzeuginnenraum eine weitere Innenraum-Sensorik angeordnet ist, die durch Überwachung des Insassen feststellt, wann innerhalb des Crashs eine Rebound-Phase erreicht ist, so dass zu diesem Zeitpunkt eine weitere Verlagerung des Fahrzeugsitzes in Fahrtrichtung verhindert wird. Durch diese Maßnahme einer weiteren Innenraum-Sensorik wird in vorteilhafter Weise dafür gesorgt, dass auch eine Rebound-Phase erkannt wird, so dass eine Verlagerung des Fahrzeugsitzes in Fahrtrichtung zum Zeitpunkt eines solchen Ereignisses nicht weitergeführt wird, wodurch in vorteilhafter Weise durch das erfindungsgemäße Insassenschutzsystem auch ein solcher Rebound-Effekt berücksichtigt wird.

Generell wird darauf verwiesen, dass die zuvor beschriebene Ausgestaltung und Vorgehensweise der Sitzverschiebung im Frontcrash, unter Berücksichtigung des in Fahrtrichtung und entgegen der Fahrtrichtung zur Verfügung stehenden Verlagerungsweges des Fahrzeugsitzes im Fahrzeuginnenraum des Fahrzeuges, auch in den hinteren Sitzreihen, insbesondere der zweiten und/oder dritten Sitzreihe und so weiter, eingesetzt werden kann.

Für die Zwecke der nachfolgenden Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

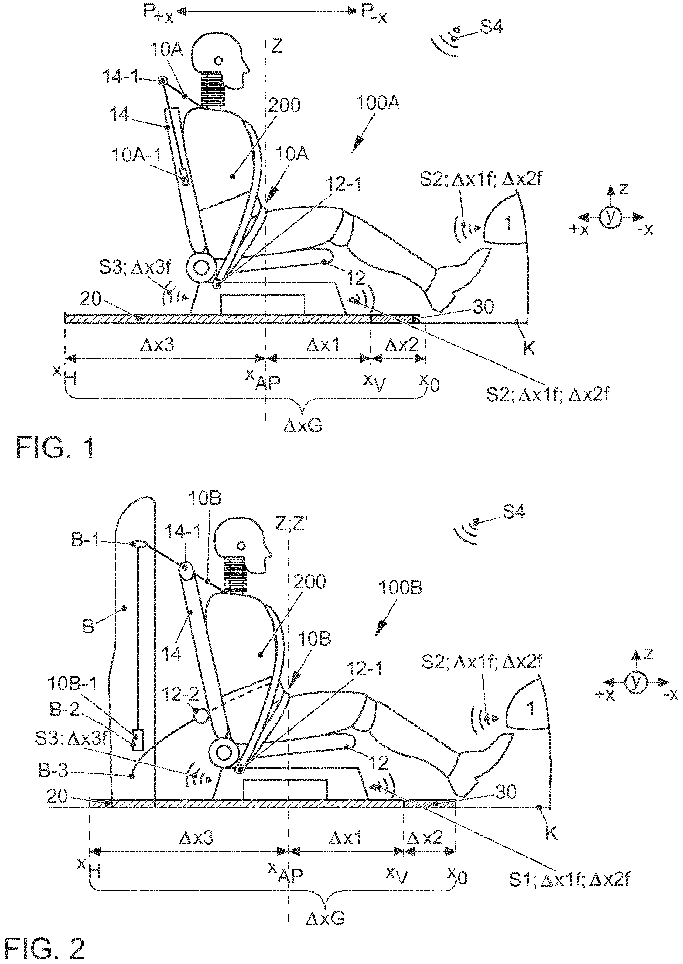

Innerhalb der nachfolgenden Beschreibung werden anhand der Figuren 1 bis 3 Insassenschutzsysteme erläutert, welche auf die Anordnung eines Frontcrash-Airbagsystems im Fahrzeuginnenraum eines Fahrzeuges verzichten.

Es wird bei einem Verzicht auf das Frontcrash-Airbagsystem von einem Fahrzeug mit einem airbaglosen Fahrzeuginnenraum gesprochen.

Es zeigen:
- Figur 1: ein Insassenschutzsystem mit einem Gurtsystem (erste Ausführungsform) eines Gurtintegralsitzes;
- Figur 2: ein Insassenschutzsystem mit einem an einer B-Säule (zweite Ausführungsform) angeschlagenen Gurtsystem in einer ersten Ausführungsvariante, wobei der Fahrzeugsitz vor der B-Säule angeordnet ist;
- Figur 3: ein Insassenschutzsystem mit einem an der B-Säule (zweite Ausführungsform) angeschlagenen Gurtsystem in der ersten Ausführungsvariante, wobei der Fahrzeugsitz hinter der B-Säule angeordnet ist.

Erste Ausführungsform:
Figur 1 zeigt einen Fahrzeugsitz 100A als Gurtintegralsitz, der zur Sicherung des Insassen 200 auf dem Gurtintegralsitz 100A ein erstes Gurtsystem 10A aufweist. Das Gurtsystem 10A weist eine sitzteilseitige Gurtschlossverriegelung, eine Gurtklemmzunge, einen Brustgurt und einen Beckengurt sowie einen Gurtretraktor 10A-1 auf, der im Regelfall einen Gurtstraffer und einen Gurtkraftbegrenzer umfasst.

Der Brustgurt ist ausgehend von einer mit dem Beckengurt gemeinsamen sitzteilseitigen Anbindung 12-1 mittels der Gurtschlossverriegelung am Sitzteil 12 über einen rückenlehnenseitigen Umlenker 14-1 des Rückenlehnenteils 14 weiter zu dem Gurtretraktor 10A-1 im Rückenlehnenteil 14 geführt, wobei der Brustgurt im Gurtretraktor 10A-1 endet. Auf der gegenüberliegenden Seite der Anbindung 12-1 (in Figur 1 nicht sichtbar) ist das Ende des Beckengurtes des Gurtintegralsitzes**100A** fest mit dem Sitzteil 12 verbunden.

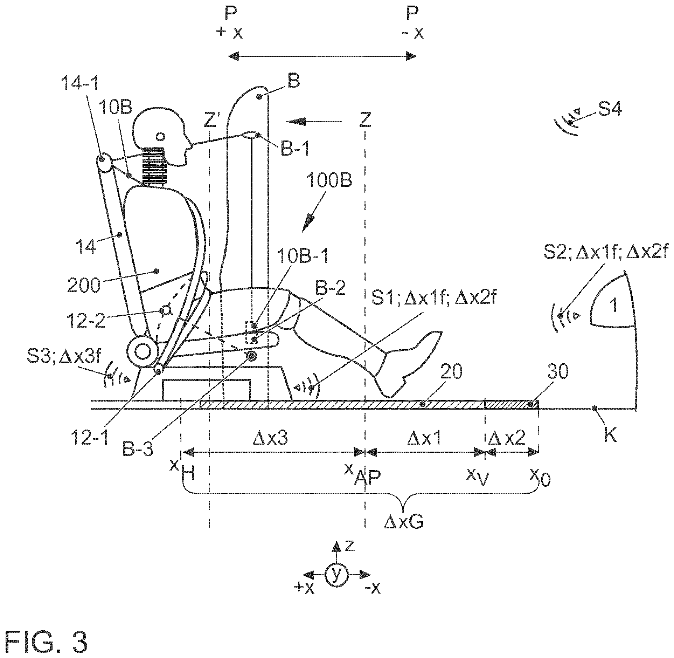

Die Figuren 2 und 3 zeigen einen Fahrzeugsitz 100B, der zur Sicherung des Insassen ein zweites Gurtsystem 10B aufweist, das einerseits an der B-Säule und andererseits am Fahrzeugsitz 100B befestigt ist.

Das zweite Gurtsystem 10B kann in zwei Ausführungsvarianten ausgebildet sein, wobei eine erste Ausführungsvariante in den Figuren 2 und 3 dargestellt ist.

Zweite Ausführungsform in einer ersten Ausführungsvariante (in den Figuren 2 und 3 dargestellt):
Das zweite Gurtsystem 10B umfasst ebenfalls eine sitzteilseitige Gurtschlossverriegelung, eine Gurtklemmzunge, einen Brustgurt und einen Beckengurt sowie einen Gurtretraktor, der im Regelfall einen Gurtstraffer und einen Gurtkraftbegrenzer umfasst.

Der Brustgurt ist ausgehend von einer mit dem Beckengurt gemeinsamen sitzteilseitigen Anbindung 12-1 am Sitzteil 12 über einen rückenlehnenseitigen Umlenker 14-1 und über einen weiteren Umlenker B-1 an der B-Säule B an einem dafür vorgesehenen Anschlagspunkt an der B-Säule B angeschlagen, wobei der Brustgurt entlang der B-Säule B weiter zu einem Gurtretraktor 10B-1 geführt ist, der in einem Anschlagspunkt B-2 an der B-Säule befestigt ist, wobei der Brustgurt in dem Anschlagspunkt B-2 endet.

Der Beckengurt ist mit seinem Ende an einem weiteren Anschlagspunkt B-3 an der B-Säule B angeschlagen und über einen auf der gegenüberliegenden Seite des Sitzteiles 12 des angeordneten sitzteilseitigen Umlenkers 12-2 am Sitzteil 12 umgelenkt und zu der mit dem Brustgurt gemeinsamen sitzteilseitigen Anbindung 12-1, insbesondere zur Gurtschlossverriegelung des Sitzteils 12, geführt, wobei der Beckengurt und Brustgurt in der Gurtschlossverriegelung gemeinsam lösbar verriegelt sind.

Zweite Ausführungsform in einer zweiten Ausführungsvariante (nicht dargestellt):
In der anderen, nicht dargestellten zweiten Ausführungsvariante ist der Beckengurt nicht zur B-Säule B geführt, sondern das Ende des Beckengurtes ist analog zu einem Gurtintegralsitz (vergleiche Figur 1) auf der gegenüberliegenden Seite der Anbindung 12-1 (in Figur 2 nicht dargestellt) fest mit dem Sitzteil 12 verbunden. Der Anschlagspunkt B-3 an der B-Säule B entfällt somit bei dieser zweiten Ausführungsvariante.

Das Gurtband des Brustgurts wird in beiden Ausführungsformen und den beschriebenen Ausführungsvarianten mit dem Gurtstraffer des Gurtretraktors 10A-1, 10B-1 zumeist federkraftbetrieben aufgerollt und entgegen der Aufrollkraft wird eine Teillänge des Gurtbandes des Brustgurts freigegeben, so dass die Länge des Gurtes aus Brust- und Beckengurt insgesamt in bekannter Weise straff an einem Körper des aufsitzenden Insassen 200 anliegt.

Bei einer Verschiebung des Fahrzeugsitzes in -/+x-Richtung sorgt der Gurtstraffer stets dafür, dass keine Gurtlose entsteht, das heißt, der Insasse 200 stets straff in den Gurten am Fahrzeugsitz 100A, 100B, insbesondere auf dem Sitzteil 12 und an dem Rückenlehnenteil 14, gehalten ist.

Die nachfolgenden Erläuterungen betreffen einen Gurtintegralsitz 100A gemäß Figur 1 und einen Fahrzeugsitz 100B gemäß Figur 2.

Ausgangspunkt der Erfindung ist ein Fahrzeug mit Sensoriken für automatisiertes Fahren und Crasherkennungs-Sensoriken, mit denen ein Crash vorhergesagt und erkannt werden kann.

Ein nicht näher dargestelltes Fahrzeug weist Sensorsysteme auf, wobei ein erstes Sensorsystem automatisiertes Fahren ermöglicht und ein zweites Sensorsystem Crashbeziehungsweise Unfallsituationen vorhersagen und erkennen kann.

Durch das zweite Sensorsystem ist es möglich, dass im Frontbereich des Fahrzeuges angeordnete crashaktive Strukturen angesteuert werden können, wobei als crashaktive Strukturen beispielsweise ein aufblasbarer Längsträger und/oder mindestens ein ausfahrbarer Längsträger und/oder mindestens ein ausfahrbarer Stoßfänger und/oder mindestens ein aufblasbarer Stoßfänger zum Einsatz gebracht wird/werden, die im Crashfall abgestimmt auf die Insassenbelastung einen optimalen Verzögerungspuls für das Fahrzeug und somit auch für den Insassen erzeugt/erzeugen.

Die Verzögerung für den Insassen 200 innerhalb des Fahrzeuginnenraumes kann je nach Crashschwere über den optimalen Verzögerungspuls für das Fahrzeug insgesamt hinaus durch ein Insassenschutzsystem optimiert werden, wie nachfolgend weiter erläutert wird.

Erfindungsgemäß ist vorgesehen, dass der Fahrzeuginnenraum des Fahrzeuges kein Frontalcrash-Airbagsystem enthält.

Das Insassenschutzsystem für einen auf einem Fahrzeugsitz aufsitzenden Insassen 200 betrifft gemäß Figur 1 ein Insassenschutzsystem für den Insassen 200, der auf dem Gurtintegralsitz 100A aufsitzt, der mittels eines Gurtsystems 10A (erste Ausführungsform) angeschnallt ist, oder ein Insassenschutzsystem für den Insassen 200, der gemäß den Figuren 2 und 3 auf einem Fahrzeugsitz 100B aufsitzt und mittels des Gurtsystems 10B (zweite Ausführungsform) angeschnallt ist.

Erfindungsgemäß ist es bei jedem der Insassenschutzsysteme vorgesehen, dass sich der Fahrzeugsitz 100A, 100B im Crashfall nach vorne in -x-Richtung verschiebt.

Der maximal zur Verfügung stehende Weg des im Crashfall in -x-Richtung nach vorne verschiebbaren Fahrzeugsitzes 100A, 100B wird durch das im Fahrzeug entfallende Frontcrash-Airbagsystem in der frontseitigen Armaturentafel 1 gegenüber herkömmlichen Fahrzeugen vergrößert.

Es entfallen erfindungsgemäß das Frontalcrash-Airbagsystem und die zu dem Frontalcrash-Airbagsystem gehörenden Halterungsstrukturen. Es ist vorgesehen, dass die Armaturentafel 1 im Fahrzeuginnenraum in +x-Richtung gesehen kleiner ausfällt als bisher. Durch den Entfall des Airbagsystems und der dazu gehörenden Halterungsstrukturen kann zudem der Tafelquerträger verkleinert werden oder sogar ganz entfallen, wodurch neben dem Entfall des Frontcrash-Airbagsystems und der dazu gehörenden Halterungsstrukturen noch weiterer Freiraum entsteht, der zur maximalen Verschiebung des Fahrzeugsitzes 100A, 100B in -x-Richtung zur Verfügung steht.

Mit anderen Worten (vergleiche Figuren 1 bis 3), der von einer hintersten Position xH des Fahrzeugsitzes 100A, 100B im Fahrzeuginnenraum ausgehend maximal zur Verfügung stehende Gesamtverlagerungsweg ΔxG zur Verschiebung über die bisher übliche vorderste Position xV hinaus ist bei dem erfindungsgemäßen Fahrzeug größer als bei herkömmlichen Fahrzeugen, da sich der Fahrzeugsitz 100A, 100B erfindungsgemäß um einen Zusatzweg Δx2 bis zu einer vordersten Maximalposition x0 verschieben lässt, wie nachfolgend erläutert wird.

Zur Erläuterung wird davon ausgegangen, dass sich der Fahrzeugsitz 100A, 100B bezogen eine vertikale Mittelachse Z des Sitzteiles 12 des Fahrzeugsitzes 100A, 100B in einer so genannten Ausgangsposition xAP oder Auslegungsposition befindet, die sich zwischen der bisher üblichen hintersten xH und der vordersten Position xV befindet, wodurch ein maximaler Verschiebeweg Δx1 nach vorne in -x-Richtung und ein maximaler Verschiebeweg Δx3 nach hinten in +x-Richtung realisierbar ist.

Durch den Entfall des Frontalcrash-Airbagsystems und der dazu gehörenden Halterungsstrukturen sowie den teilweisen oder vollständigen Entfall des Tafelquerträgers ist der zur Verfügung stehende Gesamtverschiebeweg ΔxG zwischen der Ausgangsposition xAP und der vordersten Position xV gegenüber herkömmlichen Fahrzeugen um den Zusatzweg Δx2 größer.

Dabei ist erfindungsgemäß vorgesehen, dass die Sitzanbindung bei der Verschiebung des Fahrzeugsitzes 100A, 100B in -x-Richtung wie ein Kraftbegrenzer wirkt.

Es ist vorgesehen, dass der Fahrzeugsitz 100A, 100B, insbesondere der Fahrzeugvordersitz, verschiebbar mit der Karosserie K verbunden ist. Die Verschiebung erfolgt beispielsweise über ein Sitzschienensystem 20, dessen/deren Unterschiene/n fest mit der Karosserie K verbunden ist/sind, so dass die mit dem Fahrzeugsitz 100 verbundene/n Oberschiene/n gegenüber den Unterschiene/n reversibel in +/-x-Richtung verlagerbar ist/sind.

Das Sitzschienensystem 20 lässt, wie erläutert, gemäß einer ersten Ausführungsmöglichkeit im Crashfall eine Verschiebung mit einem karosseriefesten maximalen Verschiebeweg Δx1 des Fahrzeugsitzes 100 nach vorn in -x-Richtung zu.

In einer zweiten Ausführungsmöglichkeit ist vorgesehen, dass der Fahrzeugsitz 100A, 100B in Verlängerung des in x-Richtung verlaufenden Sitzschienensystems 20 bewegt wird.

Dabei stehen verschiedene Möglichkeiten zur Verfügung, um den Fahrzeugsitz 100A, 100B weiter in -x-Richtung zu verlagern.

Dem Sitzschienensystem 20 des Fahrzeugsitzes 100A, 100B kann eine Zusatzverfahrlängeneinrichtung zugeordnet werden, die im Crashfall freigegeben wird, wenn der Verschiebeweg um Δx2 zur Verfügung stehen soll. Die crashfallabhängige Freigabe wird auch als ausschließlich crashaktiv bezeichnet.

Der Fahrzeugsitz 100A, 100B kann dabei beispielsweise auch aus dem Sitzschienensystem 20 ausgeklinkt werden und in einer Führungseinrichtung 30 um den zusätzlichen Verschiebeweg um den maximalen Betrag Δx2 verlagert werden.

Jedenfalls wird dafür gesorgt, dass der Fahrzeugsitz 100A, 100B geführt nach entsprechender Freigabe um den zusätzlichen Verschiebeweg um den maximalen Betrag Δx2 verlagerbar ist.

Mit anderen Worten wird über die Führungseinrichtung 30 dafür gesorgt, dass der Fahrzeugsitz 100A, 100B über den bisher möglichen durch das Sitzschienensystem 20 realisierbaren maximalen Verschiebeweg Δx1 hinaus weiter bis zu der vordersten Maximalposition x0 in -x-Richtung (wie in den Figuren 1 bis 3 anhand des jeweiligen Pfeils P-x verdeutlicht wird) um Δx2 nach vorne geführt wird.

Durch die geführte Freigabe des Fahrzeugsitzes 100A, 100B kann ein maximaler zusätzlicher Betrag des Verschiebeweges von beispielsweise Δx2 = 100 bis 200 mm bereitgestellt werden, der (vergleiche Figuren 1 bis 3) von der Ausgangsposition xAP des Fahrzeugsitzes 100A, 100B ausgehend eine in vorteilhafter Weise durch die entsprechenden Maßnahmen erreichte Verlängerung des maximalen Verschiebeweges Δx1 darstellt.

Die sich im Crashfall aus dem Gewicht des Fahrzeugsitzes 100 und des Insassen 200 ergebende Trägheitskraft kann erfindungsgemäß über den zur Verfügung stehenden Verschiebeweg Δx1 oder Δx1 plus Δx2 zumindest teilweise oder vollständig aufgenommen werden. Mit anderen Worten, die zum Zeitpunkt des Crashs auftretenden Trägheitskräfte werden durch das jeweilige Insassenschutzsystem möglichst vollständig aufgenommen oder zumindest teilweise aufgenommen.

Funktionell ist innerhalb des jeweiligen Insassenschutzsystems nämlich eine Kraftbegrenzerfunktion vorgesehen, die in vorteilhafter Weise innerhalb der Fahrzeugsitzanbindung an der Karosserie K während des Verschiebeweges Δx1 (erste Ausführungsmöglichkeit) und auch innerhalb der Fahrzeugsitzführung während des Verschiebeweges Δx2 (zweite Ausführungsmöglichkeit) wirkt.

Innerhalb der Fahrzeugsitzanbindung und/oder der Fahrzeugsitzführung der Führungseinrichtung 30 wird der Fahrzeugsitz 100A, 100B zur Aufnahme der Trägheitskräfte mit mindestens einer Kraftaufnahme-Komponente versehen.

Diese mindestens eine Kraftaufnahme-Komponente ist in der Lage, einerseits die während des Crashs auftretenden Trägheitskräfte aufzunehmen und andererseits so viel Verlagerungsweg in -x-Richtung (Δₓ1 oder Δₓ1 plus Δx2) freizugeben, dass je nach Unfallsituation eine kinematische Veränderung der Position des Fahrzeugsitzes 100 mit dem darauf sitzenden Insassen 200 um einen optimalen vorher definierten Verlagerungsweg innerhalb des zur Verfügung stehenden Verlagerungsweges (Δx1 oder Δx1 plus Δx2) über der Zeit ermöglicht wird.

Die Kraftaufnahme-Komponente ist ein Federelement oder Dämpfungselement oder ein Zugstab oder eine Drehfeder oder ein Deformationselement oder dergleichen.

Vorgesehen ist, dass, um eine optimale Verzögerung des Insassen 200 innerhalb des Verlagerungsweges (Δx1 oder Δx1 plus Δx2) zu erreichen, ein Kraftverlauf der Kraftaufnahme über der Zeit vorgegeben ist. Hierbei wird vorgeschlagen, den Kraftverlauf der Kraftaufnahme über der Zeit anhand von Kennlinien schaltbar zu machen, so dass durch Umschaltung des Kraftverlaufs der Kraftaufnahme innerhalb der mindestens einen Kraftaufnahme-Komponente je nach Crashschwere eine optimale Verzögerungskennlinie gewählt wird und der Insasse 200 durch das Insassenschutzsystem optimal geschützt wird.

Erfindungsgemäß ist eine den Freiraum in -x-Richtung sensierende erste Innenraum-Sensorik S1 (vergleiche Figuren) vorgesehen, die an der Vorderseite des Fahrzeugsitzes 100 angeordnet ist.

Es kann auch eine den Freiraum in +x-Richtung sensierende zweite Innenraum-Sensorik S2 (vergleiche Figuren) angeordnet sein, die in der Armaturentafel 1 angeordnet ist.

Die Innenraum-Sensoriken S1, S2 können in Kombination eingesetzt werden, so dass eine redundante Feststellung und Überwachung des möglichen Verlagerungsweges Δx1 oder Δx1 plus Δx2 möglich ist.

Mindestens eine der Innenraum-Sensoriken S1, S2 stellt den möglichen Verlagerungsweg Δx1 oder Δx1 plus Δx2 fest, indem im Crashfall der Freiraum zur möglichen Verschiebung des Fahrzeugsitzes 100A, 100B im Fahrzeuginnenraum zwischen der zum Insassen 200 zugewandten Frontseite der Armaturentafel 1 und der der Armaturentafel 1 am nächsten liegenden Vorderseite eines Sitzteiles 12 des Fahrzeugsitzes 100 festgestellt wird.

Dabei ist vorgesehen, dass der Verlagerungsweg Δx1 oder Δx1 plus Δx2 in Abhängigkeit des festgestellen Freiraumes gewählt wird. Ist der maximierte Verlagerungsweg Δx1 oder Δx1 plus Δx2 nicht vollständig nutzbar, weil sich zwischen der Frontseite der Armaturentafel 1 und der Vorderseite des Fahrzeugsitzes 100 ein Gegenstand befindet, wird nur der freie zur Verfügung stehende Verlagerungsweg Δx1f, Δx2f innerhalb des maximal möglichen Verlagerungsweges Δx1 oder Δx1 plus Δx2 genutzt, wobei vorgesehen ist, die Kraft/Weg-Kennung mithin die Kraft/Weg-Kennlinien des definierten Verlagerungsweges über der Zeit entsprechend anzupassen, insbesondere schaltbar anzupassen.

Vorgesehen ist, dass der Fahrzeugsitz 100A, 100B, wie bereits erläutert, einen nicht näher dargestellten Fangmechanismus für die Beine und/oder Arme und Hände des Insassen 200 umfasst, so dass in dem Moment, in dem der Fahrzeugsitz 100A, 100B in -x-Richtung nach vorne bewegt wird, die Beine und/oder Arme und Hände des Insassen 20 im jeweiligen Fangmechanismus am Fahrzeugsitz 100A, 100B fixiert werden und dadurch nicht abgebogen oder eingeklemmt werden können.

Es ist vorgesehen, dass der Fahrzeugsitz 100A, 100B auch eine Drehfunktion um seine vertikale Mittelachse Z aufweisen kann, so dass der Fahrzeugsitz 100 ein Drehsitz ist, der um 360°, insbesondere um 180°, gedreht werden kann, so dass der Insasse entgegen der Fahrtrichtung im Fahrzeug sitzt.

Der Drehsitz ist erfindungsgemäß im Crashfall in jeder Drehposition arretiert, wobei er jede der möglichen Drehposition einnehmen kann, weil anders als bisher keine Beeinträchtigungen durch einen auslösenden Airbag eines Frontcrash-Airbagsystems zu erwarten sind, so dass ein Insassenschutz auch gewährleistet ist, wenn der Insasse eine von der üblichen Sitzposition abweichende Sitzposition einnimmt.

Mithin können beispielsweise der Fahrer- und/oder der Beifahrersitz um 180° gedreht angeordnet sein. Es wird im Falle eines Heckcrashs vorgeschlagen, dass ein gedrehter, insbesondere ein um 180° gedrehter Fahrzeugsitz 100A, 100B, wie in der Beschreibung erläutert ist, im Heckcrashfall in Sitzlängsrichtung entgegen der üblichen Fahrtrichtung +x verschoben wird oder erst in der üblichen Fahrtrichtung -x (wofür durch den Entfall der Armaturentafel im Innenraum des Fahrzeuges entsprechend mehr Gesamtverlagerungsweg ΔxG als bisher zur Verfügung steht) und erst dann entgegen der Fahrtrichtung +x verschoben wird.

Es wird ebenfalls dafür gesorgt, dass sich der jeweilige Drehsitz in der jeweiligen Drehposition innerhalb der Fahrzeugsitzanbindung an der Karosserie K während des Verschiebeweges Δx1 weiterhin in einem arretierten Zustand befindet.

Beim Nachvornefahren des Drehsitzes innerhalb der Fahrzeugsitzführung der Führungseinrichtung 30 gegenüber der Karosserie K um den Verschiebeweg Δx2 in Pfeilrichtung des Pfeils P-x wird ebenfalls dafür gesorgt, dass der Drehsitz nicht in eine Drehbewegung gerät.

Das Rückenlehnenteil 14 des Drehsitzes weist zudem eine nicht näher dargestellte Kopfstütze auf, die den Kopf des Insassen 200 mittels Kopfstützen-Seitenwangen crashaktiv umgreift, so dass der Kopf des Insassen 200 im Crashfall bei seitlich gedrehtem Sitz nicht schleudern kann.

Wie vorausgeschickt, weist das Fahrzeug Sensorsysteme auf, wobei das erste Sensorsystem automatisiertes Fahren ermöglicht und das zweite Sensorsystem Crash- beziehungsweise Unfallsituationen vorhersagen und erkennen kann.

Ein vor dem Crashzeitpunkt liegender Unfall (Pre-Crash) und/oder ein zum Crashzeitpunkt stattfindender Unfall kann/können mittels des zweiten Sensorsystems sensiert werden.

Im sensierten Pre-Crash-Fall wird der Fahrzeugsitz 100A, 100B erfindungsgemäß ausgehend von seiner Position, zur beispielhaften Erläuterung ausgehend von seiner Ausgangsposition xAP mit Hilfe einer nicht näher dargestellten Verstelleinheit, insbesondere eines Verschiebemotors soweit wie möglich in +x-Richtung nach hinten in die Position xH gefahren, um den Verschiebeweg in -x-Richtung nach vorne noch weiter um maximal Δx3f zu vergrößern, wie anhand des Pfeils P+x verdeutlicht wird.

Zur Überprüfung, ob hinter dem Fahrzeugsitz 100A, 100B genügend Freiraum zur Verfügung steht, wird analog zur ersten und zweiten Innenraum-Sensorik S1, S2 zwischen Armaturentafel 1 und Vorderseite des Fahrzeugsitzes 100 eine weitere dritte Innenraum-Sensorik S3 in der Rückseite des Fahrzeugsitzes 100A, 100B insbesondere eine Kamera und/oder ein Berührungssensor angeordnet, die/der den vorhandenen Freiraum feststellt, um den der Fahrzeugsitz 100A, 100B in Richtung des Pfeils P+x bewegt werden kann.

Dabei ist vorgesehen, dass der freie Verlagerungsweg Δx3f des maximal möglichen zur Verfügung stehenden Verlagerungsweges Δx3 zwischen der jeweiligen Position des Fahrzeugsitzes 100A, 100B bis zur Position xH in Abhängigkeit des festgestellten Freiraumes gewählt wird.

Ist beispielsweise der maximale Verlagerungsweg Δx3 zwischen Ausgangsposition des Fahrzeugsitzes 100 und der hintersten Position xH nicht vollständig nutzbar, weil sich zwischen der Rückseite des Fahrzeugsitzes 100 und der Vorderseite des hinter dem Fahrzeugsitz in +x-Richtung gesehen liegenden Objektes beispielsweise ein Gegenstand befindet, wird nur der zur Verfügung stehende freie Verlagerungsweg Δx3f innerhalb des maximalen Verlagerungsweges Δx3 genutzt, wobei vorgesehen ist, die Kraft/Weg-Kennung mithin die Kraft/Weg-Kennlinien des definierten Verlagerungsweges über der Zeit entsprechend anzupassen, insbesondere schaltbar anzupassen.

Eine noch weitere vierte Innenraum-Sensorik S4 stellt durch Überwachung des Insassen 200 fest, wann innerhalb des Crashs die Rebound-Phase erreicht ist, so dass zu diesem Zeitpunkt eine weitere Verlagerung des Fahrzeugsitzes 100A, 100B nach vorne in Pfeilrichtung P-x gesehen verhindert wird.

In den Figuren 2 und 3 ist, wie bereits erläutert, im Gegensatz zu der Figur 1 ein Fahrzeugsitz 100B mit dem zweiten Gurtsystem 10B gemäß der zweiten Ausführungsform in der ersten Ausführungsvariante in unterschiedlichen Positionen dargestellt.

Der Fahrzeugsitz 100B gemäß den Figuren 2 und 3 ist mittels des zweiten Gurtsystems 10B im Unterschied zum Gurtintegralsitz 100A an der B-Säule B befestigt, wodurch erfindungsgemäß einige technische Details zum Tragen kommen.

Erfindungsgemäß ist in beiden Ausführungsformen und den jeweiligen Ausführungsvarianten vorgesehen, dass die Gurte des ersten und zweiten Gurtsystems 10A, 10B in einem vorhergesagten oder erkannten Crashfall parallel zu seiner Verschiebung des jeweiligen Fahrzeugsitzes 100A, 100B in +x-Richtung um Δx3 spätestens zum erkannten Zeitpunkt des eingetretenen Crashs wie folgt straff am Körper des Insassen 200 gehalten werden.

Im vorhergesagten Crashfall (Pre-Crash) oder im Crashfall werden die Gurte des ersten und zweiten Gurtsystems 10A, 10B bei beiden Ausführungsformen und den jeweiligen Ausführungsvarianten mittels des Gurtstraffers des jeweiligen Gurtretraktors 10A-1, 10B-1 durch einen schnellen Antrieb, insbesondere einen Elektromotor, reversibel vorgestrafft und - insofern kein Crash erfolgt - wieder entlastet. Der zugehörige elektromotorische Antrieb ist bevorzugt in den jeweiligen Gurtretraktor 10A-1, 10B-1 integriert.

Im vorhergesagten Crashfall (Pre-Crash) oder im Crashfall wird der Gurt bei beiden Ausführungsformen und den jeweiligen Ausführungsvarianten mittels des Gurtstraffers des jeweiligen Gurtretraktors 10A-1, 10B-1 durch einen pyrotechnisch ausgebildeten Gurtstraffer des Retraktors 10A-1, 10B-1 irreversibel gestrafft. Der zugehörige pyrotechnische Antrieb ist bevorzugt in den jeweiligen Gurtretraktor 10A-1, 10B-1 integriert.

Mit anderen Worten, der jeweilige Gurtstraffer des Gurtretraktors 10A-1, 10B-1 der Gurtsysteme 10A, 10B beider Ausführungsformen und der jeweilige Ausführungsvarianten weist mindestens einen reversiblen Antrieb zur Gurtstraffung und/oder einen irreversiblen Antrieb zur Gurtstraffung auf. Der oder die zugehörige/n Antrieb/e ist/sind bevorzugt in den jeweiligen Gurtretraktor 10A-1, 10B-1 integriert.

Die Figur 2 zeigt das Insassenschutzsystem mit einem an der B-Säule B (zweite Ausführungsform) angeschlagenen zweiten Gurtsystem 10B in der ersten Ausführungsvariante, wobei der Fahrzeugsitz 100B in einer Position vor der B-Säule angeordnet ist, während der Fahrzeugsitz 100B gemäß der Figur 3 gemäß der ersten Ausführungsvariante in einer Position hinter der B-Säule angeordnet ist.

Wird der Fahrzeugsitz 100B, wie zuvor erläutert, beispielsweise ausgehend von seiner Ausgangsposition xAP gemäß Figur 2 im Pre-Crash mit Hilfe der nicht näher dargestellten Verstelleinheit, insbesondere eines Verschiebemotors, in +x-Richtung um den Verschiebeweg Δx3 gemäß Figur 3 nach hinten verschoben, wie anhand des Pfeils P+x verdeutlicht wird, führt eine Verschiebung nach hinten, hinter die in Höhenrichtung z-Richtung verlaufende B-Säule B, gegebenenfalls zu einer so genannten Gurtlose des Gurtes des zweiten Gurtsystems 10B.

Durch die Verschiebung um den Verschiebeweg Δx3 wird, wie bereits erläutert, der zur Verfügung stehende Gesamtverschiebeweg ΔxG vergrößert, jedoch werden erfindungsgemäß geeignete Maßnahmen getroffen, um keine Gurtlose entstehen zu lassen, damit der Gurt stets ausreichend straff am Körper des Insassen 200 anliegt.

Bei dem zweiten Gurtsystem 10B sind erfindungsgemäß zur Straffung des Gurtes als Maßnahmen (vergleiche Figur 2 und 3) die rückenlehnenseitigen und sitzteilseitigen Umlenker 14-1 und 12-2 angeordnet, die den Gurt bei jeder Position des Fahrzeugsitzes 100B stets nah am Körper des Insassen 200 halten.

Wird der Fahrzeugsitz 100B im sensierten Pre-Crash hinter die B-Säule B gefahren, kommt es zu einer durch die Verschiebebewegung in +x-Richtung automatischen Gurtstraffung, so dass eine reversible Vorstraffung gegebenenfalls nicht notwendig ist.

In Abhängigkeit des Abstandes der vertikalen Mittelachse Z' (vergleiche Figur 3) des Sitzteiles 12 des Fahrzeugsitzes 100B von der vertikalen Achse der B-Säule B ist während der im Pre-Crash-Fall vorgenommenen Verschiebebewegung in +x-Richtung hinter die B-Säule B (vergleiche nochmals Figur 3) ein Nachlassen des Gurtes über den reversiblen Antrieb vorgesehen.

Wird der Fahrzeugsitz 100B im sensierten Crashfall ausgehend von der Position hinter der B-Säule B wieder nach vorne gefahren, kommt es zu einer durch die Verschiebebewegung des Fahrzeugsitzes 100B in -x-Richtung automatischen Gurtstraffung, jedoch erst sobald der Fahrzeugsitz 100B die B-Säule B passiert hat.

Daraus folgt, dass der Gurt erfindungsgemäß bei der Verschiebebewegung des Fahrzeugsitzes 100B nach vorn im Crashfall durch den herkömmlichen Gurtstraffer oder zusätzlich durch den reversiblen (elektromotorischen) Gurtstraffer und/oder durch den irreversiblen (pyrotechnischen) Gurtstraffer gestrafft wird, so dass auf keinen Fall - bis der Fahrzeugsitz 100B die B-Säule B erreicht hat - eine Gurtlose des Gurtes am Körper des Insassen 200 entsteht.

In Abhängigkeit des Abstandes der vertikalen Mittelachse Z' des Sitzteiles 12 des Fahrzeugsitzes 100B von der vertikalen Achse der B-Säule B ist während der im Crash-Fall vorgenommenen weiteren Verschiebebewegung in -x-Richtung - an der B-Säule B vorbei-mithin vor die B-Säule B (vergleiche Figur 2 = rechts der B-Säule) erfindungsgemäß ein Nachlassen des Gurtes des zweiten Gurtsystems 10B über den reversiblen (elektromotorischen) Antrieb des Gurtstraffers vorgesehen.

Es ist somit in Abhängigkeit der Crashschwere möglich, den reversiblen (elektromotorischen) Gurtstraffer, den irreversiblen (pyrotechnischen) Gurtstraffer oder eine Kombination der Gurtstraffer zu nutzen, um den Insassen 200 zu sichern. Bei dem zweiten Gurtsystem 10B ist auch ein Nachlassen des Gurtes vorgesehen.

In einer bevorzugten Ausgestaltung kann der irreversible (pyrotechnische) Gurtstraffer in Abhängigkeit der Crashschwere und/oder bezüglich der notwendigen Straffung des Gurtes bedarfsabhängig stufenweise ausgebildet und ausgelöst werden.

Die vorhergehende Beschreibung gilt auch für die zweite Ausführungsvariante der zweiten Ausführungsform, da der einzige Unterschied darin besteht, dass der Beckengurt nicht zum Anschlagspunkt B-3 am Säulenfuß der B-Säule B (vergleiche Figuren 2 und 3) geführt ist, sondern das Ende des Beckengurtes ist analog zu einem Gurtintegralsitz (vergleiche Figur 1) auf der gegenüberliegenden Seite der Anbindung 12-1 (in Figur 2 nicht dargestellt) fest mit dem Sitzteil 12 verbunden.

Diese Maßnahmen zur Vermeidung der Gurtlose - bei der Verschiebung des Fahrzeugsitzes 100A in +x-Richtung hinter die B-Säule B des Fahrzeuges - sind nur bei den beiden Ausführungsvarianten der zweiten Ausführungsform notwendig, mithin bei einem Gurtintegralsitz 100A gemäß Figur 1 nicht notwendig, weil sich hier keine Gurtlose bildet, da das Gurtintegralsystem 10A nicht an der B-Säule B angeschlagen ist.

Bei den beschriebenen Ausführungsformen und den jeweiligen Ausführungsvarianten kann somit eine optimale Beschleunigung des Insassen 200 innerhalb des zur Verfügung stehenden Verlagerungsweges (Δx3 plus Δx1 oder Δx3 plus Δx1 plus Δx2) unter Berücksichtigung einer hohen Sicherheit für den Insassen 200 erreicht werden, wobei wiederum ein Kraftverlauf der Kraftabgabe über der Zeit vorgegeben ist.

Hierbei wird vorgeschlagen, den Kraftverlauf der Kraftabgabe über der Zeit ebenfalls schaltbar zu machen, so dass je nach den Crashbedingungen eine optimale Beschleunigung des Insassen 200 in -x-Richtung durch den eingeschalteten Kraftverlauf der Kraftabgabe nach vorne erreicht wird.

In einer bevorzugten Ausgestaltung ist es vorgesehen, dass der Fahrzeugsitz 100 auch in -x-Richtung nach vorne beschleunigt werden kann. Diese Beschleunigung in -x-Richtung kann durch ein Pyrotechniksystem und/oder ein Federsystem als Kraftabgabe-Komponente bewirkt werden, welche zwischen dem jeweiligen Fahrzeugsitz 100A, 100B und der Karosserie angeordnet ist, so dass ein Nachvornenicken des Kopfes des Insassen 200 verhindert wird.

### Bezugszeichenliste

- 1: Armaturentafel
- 100A: Fahrzeugsitz (Gurtintegralsitz)
- 10A: erstes Gurtsystem des Fahrzeugsitzes 100A
- 10A-1: Gurtretraktor (Gurtintegralsitz)
- 100B: Fahrzeugsitz
- 10B: zweites Gurtsystem des Fahrzeugsitzes 100B
- 10B-1: Gurtretraktor
- 200: Insasse
- B: B-Säule
- B-1: Umlenker
- B-2: Anschlagspunkt
- B-3: Anschlagspunkt
- 12: Sitzteil
- 12-1: sitzteilseitige Anbindung (Gurtschlossverriegelung)
- 12-2: Umlenker am Sitzteil 12
- 14: Rückenlehnenteil
- 14-1: Umlenker am Rückenlehnenteil 14
- 20: Sitzschienensystem
- 30: Führungseinrichtung
- ΔxG: Gesamtverlagerungsweg
- Δx1: maximaler Verlagerungsweg
- Δx1f: freier zur Verfügung stehender Verlagerungsweg
- Δx2: maximaler Verlagerungsweg
- Δx2f: freier zur Verfügung stehender Verlagerungsweg
- Δx3: maximaler Verlagerungsweg
- Δx3f: freier zur Verfügung stehender Verlagerungsweg
- xH: hinterste Position
- xAP: Ausgangsposition
- xV: vorderste Position
- x0: Nullposition
- S1: Innenraum-Sensorik
- S2: Innenraum-Sensorik
- S3: Innenraum-Sensorik
- S4: Innenraum-Sensorik
- -x: Richtung in der üblichen Fahrtrichtung eines Fahrzeuges
- +x: Richtung entgegen der üblichen Fahrtrichtung
- y: Richtung in der Horizontalen quer zur x-Richtung
- z: Richtung in der Vertikalen quer zur x-Richtung
- Z: vertikale Mittelachse des Sitzteils 12 in Ausgangsposition xAP
- Z': vertikale Mittelachse des Sitzteils 12 gegenüber xAP hinter oder vor die B-Säule B verschoben

## Patentansprüche

1. Fahrzeug mit einem im Fahrzeuginnenraum angeordneten Fahrzeugsitz (100A, 100B), dem ein Insassenschutzsystem zugeordnet ist, welches mindestens eine Crasherkennungs-Sensorik aufweist, die im Crashfall mindestens einen Beschleunigungswert erfasst, der im Crashfall auf das Fahrzeug einwirkt, so dass in Abhängigkeit des erfassten Beschleunigungswertes auf den mit dem Fahrzeug verbundenen Fahrzeugsitz (100A, 100B) und auf den auf dem Fahrzeugsitz (100A, 100B) aufsitzenden Insassen (200) Trägheitskräfte wirken, wobei der Beschleunigungswert zur crashadaptiven Vorgabe mindestens eines durch mindestens eine Kraftaufnahme-Komponente zugelassenen Verlagerungsweges (Δx/t) des Fahrzeugsitzes (100A, 100B) über der Zeit dient, wobei ein Gesamtverlagerungsweg (ΔxG) des Fahrzeugsitzes (100A, 100B) in Fahrtrichtung (-x) einen sich in Fahrtrichtung (-x) an einen Verlagerungsweg (Δx1) des Fahrzeugsitzes (100A, 100B) zur Sitzlängsverstellung in einem Sitzschienensystem (20) anschließenden zusätzlichen ausschließlich crashaktiven Verlagerungsweg (Δx2) umfasst, wobei der zusätzliche ausschließlich crashaktive Verlagerungsweg (Δx2) durch eine Vergrößerung des in Fahrtrichtung (-x) vor dem Fahrzeugsitz (100A, 100B) zur Verfügung stehenden Freiraumes im Fahrzeuginnenraum des Fahrzeuges bewirkt wird,
**dadurch gekennzeichnet, dass**
sich der Fahrzeugsitz (100A, 100B) ausgehend von der vordersten Position (xV) des maximalen Verschiebeweges (Δx1) nach vorn, nach einer crashfallabhängigen Freigabe, um den ausschließlich crashaktiven Verlagerungsweg (Δx2) bis zu einer vordersten Maximalposition (x0) weiter nach vorn verschieben lässt, wobei der Fahrzeugsitz (100A, 100B) nach der crashfallabhängigen Freigabe aus dem Sitzschienensystem (20) ausgeklinkt wird, wonach der Fahrzeugsitz (100A, 100B) in einer Führungseinrichtung (30) um den zusätzlichen crashaktiven Verlagerungsweg (Δx2) über den maximalen Verschiebeweg (Δx1) hinaus verlagerbar ist.

2. Fahrzeug nach Anspruch 1, **dadurch gekennzeichnet, dass** die Vergrößerung des in Fahrtrichtung zusätzlich vor dem Fahrzeugsitz (100A, 100B) zur Verfügung stehenden Freiraumes durch den Entfall eines Frontcrash-Airbagsystems in einer entgegen der Fahrtrichtung (+x) verkleinerten Armaturentafel (1) des Fahrzeuges erreicht wird.

3. Fahrzeug nach Anspruch 1, **dadurch gekennzeichnet, dass** das Fahrzeug zumindest frontseitig crashaktive, insbesondere ausfahrbare adaptive Strukturen umfasst, die den Beschleunigungswert reduzieren.

4. Fahrzeug nach Anspruch 1, **dadurch gekennzeichnet, dass** ein zur Verfügung stehender freier Verlagerungsweg (Δx1f, Δx2f) innerhalb des Gesamtverlagerungsweges (ΔxG) durch mindestens eine Innenraum-Sensorik (S1, S2) erfasst wird, die den zur Verfügung stehenden Freiraum zwischen einer Vorderseite des Fahrzeugsitzes (100A, 100B) und der dem Fahrzeugsitz (100A, 100B) zugewandten Seite der Armaturentafel (1) erfasst.

5. Fahrzeug nach Anspruch 1, **dadurch gekennzeichnet, dass** die Crasherkennungs-Sensorik einen vor einem Crashzeitpunkt liegenden Unfall (Pre-Crash) vorhersagt und/oder einen zum Crashzeitpunkt stattfindenden Unfall erfasst, so dass der Fahrzeugsitz (100A, 100B) mit dem aufsitzenden Insassen (200) um einen zur Sitzlängsverstellung und zur crashaktiven Verlagerung vorgesehenen Verlagerungsweg (Δx3) vor dem Crashzeitpunkt entgegen der Fahrtrichtung (+x) gefahren wird, um den zum Crashzeitpunkt zur Verfügung stehenden Gesamtverlagerungsweg (ΔxG) in Fahrtrichtung (-x) über die zur Verfügung stehenden Verlagerungswege (Δx1, Δx2) noch um den Verlagerungsweg (Δx3) zu vergrößern.

6. Fahrzeug nach Anspruch 1, **dadurch gekennzeichnet, dass** der zur Verfügung stehende freie Verlagerungsweg (Δx3f) innerhalb des Gesamtverlagerungsweges (ΔxG), der vor dem Crashzeitpunkt entgegen der Fahrtrichtung (+x) durchgeführt wird, durch mindestens eine Innenraum-Sensorik (S3) erfasst wird, die den zur Verfügung stehenden Freiraum zwischen einer Rückseite des Fahrzeugsitzes (100A, 100B) und einem Objekt hinter dem Fahrzeugsitz (100A, 100B) erfasst.

7. Fahrzeug nach Anspruch 1, **dadurch gekennzeichnet, dass** der Fahrzeugsitz (100A, 100B) eine Sitzanbindung aufweist, die mindestens eine Kraftaufnahme-Komponente umfasst, welche die Trägheitskräfte innerhalb des Gesamtverlagerungsweges (ΔxG/t) über der Zeit aufnimmt, wodurch der Fahrzeugsitz (100A, 100B) mit dem aufsitzenden Insassen (200) innerhalb des Gesamtverlagerungsweges (ΔxG/t) über der Zeit mit einer optimierten Verzögerung zur Verringerung der biomechanischen Belastungswerte abgebremst wird.

8. Fahrzeug nach Anspruch 1, **dadurch gekennzeichnet, dass** der Fahrzeugsitz (100A, 100B) eine Sitzanbindung aufweist, die mindestens eine Kraftabgabe-Komponente umfasst, welche Kräfte innerhalb des Gesamtverlagerungsweges (ΔxG/t) über der Zeit abgibt, wodurch der Fahrzeugsitz (100A, 100B) mit dem aufsitzenden Insassen (200) innerhalb des Gesamtverlagerungsweges (ΔxG/t) über der Zeit mit einer optimierten Beschleunigung verzögert wird.

9. Fahrzeug nach mindestens einem der Ansprüche 4 bis 8, **dadurch gekennzeichnet, dass** über die mindestens eine Kraftaufnahme-Komponente Kräfte innerhalb des erfassten Gesamtverlagerungsweges (ΔxG/t) über der Zeit in Abhängigkeit des erfassten Beschleunigungswertes durch Festlegung einer an den Beschleunigungswert und den erfassten Gesamtverlagerungsweg (ΔxG/t) über der Zeit angepasste Kraft/Weg-Kennlinie aufgenommen werden.

10. Fahrzeug nach den Ansprüchen 7 und 8, **dadurch gekennzeichnet, dass** die mindestens eine Kraftaufnahme-Komponente ein Deformationselement und/oder ein Zugstab und/oder ein Torsionsstab ist und die mindestens eine Kraftaufnahme-Komponente mindestens ein Pyrotechniksystem und/oder mindestens ein Federsystem ist, wobei die mindestens eine Komponente auf eine Masse des aufsitzenden Insassen (200) abgestimmt ist, die mittels einer dem Fahrzeugsitz (100A, 100B) zugeordneten Gewichtserkennungssenorik ermittelt wird.

11. Fahrzeug nach Anspruch 1, **dadurch gekennzeichnet, dass** der Fahrzeugsitz (100A, 100B) ein mit einem integrierten Gurtsystem (10A) versehener Gurtintegralsitz (100A) oder ein mit einem an einer B-Säule (B) angeschlagenen Drei-Punkt-Gurtsystem (10B) versehener Fahrzeugsitz (100A) ist.

12. Fahrzeug nach Anspruch 1, **dadurch gekennzeichnet, dass** der Fahrzeugsitz (100A, 100B) je mindestens einen crashaktiven Fangmechanismus für die Beine und/oder Arme und/oder Hände des Insassen (200) umfasst.

13. Fahrzeug nach Anspruch 1, **dadurch gekennzeichnet, dass** ein Rückenlehnenteil (14) des Fahrzeugsitzes (100A, 100B), insbesondere eines Drehsitzes, eine Kopfstütze aufweist, die den Kopf des Insassen (200) mittels Kopfstützen-Seitenwangen crashaktiv umgreift.

14. Fahrzeug nach Anspruch 10, **dadurch gekennzeichnet, dass** das Gurtsystem (10A, 10B) der jeweiligen Fahrzeugsitze (100A, 100B) einen reversiblen, insbesondere elektromotorischen Gurtstraffer und/oder einen irreversiblen, insbesondere pyrotechnischen Gurtstraffer umfasst/umfassen.

15. Fahrzeug nach Anspruch 1, **dadurch gekennzeichnet, dass** im Fahrzeuginnenraum eine Innenraum-Sensorik (S4) angeordnet ist, die durch Überwachung des Insassen (200) feststellt, wann innerhalb des Crashs eine Rebound-Phase erreicht ist, so dass zu diesem Zeitpunkt eine weitere Verlagerung des Fahrzeugsitzes (100A, 100B) in Fahrtrichtung (-x) verhindert wird.

## Claims

1. Vehicle having a vehicle seat (100A, 100B) which is arranged in the vehicle interior and to which an occupant protection system is assigned, which has at least one crash-detection sensor system which, in the event of a crash, detects at least one acceleration value which acts on the vehicle in the event of a crash so that inertial forces act on the vehicle seat (100A, 100B) connected to the vehicle and on the occupant (200) sitting on the vehicle seat (100A, 100B) as a function of the detected acceleration value, wherein the acceleration value is used for the crash-adaptive specification of at least one displacement path (Δx/t) over time of the vehicle seat (100A, 100B) permitted by at least one force-absorption component, wherein a total displacement path (ΔxG) of the vehicle seat (100A, 100B) in the direction of travel (-x) comprises an additional exclusively crash-active displacement path (Δx2), which adjoins, in the direction of travel (-x), a displacement path (Δx1) of the vehicle seat (100A, 100B) for longitudinal seat adjustment in a seat rail system (20), wherein the additional exclusively crash-active displacement path (Δx2) is brought about by an enlargement of the free space available in the vehicle interior of the vehicle in front of the vehicle seat (100A, 100B) in the direction of travel (-x),
**characterized in that**
the vehicle seat (100A, 100B), starting from the foremost position (xV) of the maximum displacement path (Δx1) forward, can, after a crash-dependent release, be moved further forward by the exclusively crash-active displacement path (Δx2) up to a foremost maximum position (x0), wherein after the crash-dependent release the vehicle seat (100A, 100B) is disengaged from the seat rail system (20), after which the vehicle seat (100A, 100B) can be displaced in a guide device (30) by the additional crash-active displacement path (Δx2) beyond the maximum displacement path (Δx1).

2. Vehicle according to claim 1, **characterized in that** the enlargement of the free space which is additionally available in the direction of travel in front of the vehicle seat (100A, 100B) is achieved by the omission of a frontal crash airbag system in a dashboard (1) of the vehicle which is reduced in size counter to the direction of travel (+x).

3. Vehicle according to claim 1, **characterized in that** the vehicle comprises, at least at the front end, crash-active, in particular extendable, adaptive structures which reduce the acceleration value.

4. Vehicle according to claim 1, **characterized in that** an available free displacement path (Δx1f, Δx2f) within the total displacement path (ΔxG) is detected by at least one interior sensor system (S1, S2) which detects the available free space between a front side of the vehicle seat (100A, 100B) and the side of the dashboard (1) facing the vehicle seat (100A, 100B).

5. Vehicle according to claim 1, **characterized in that** the crash detection sensor system predicts an accident before a crash time (pre-crash) and/or detects an accident occurring at the crash time, so that before the crash time the vehicle seat (100A, 100B) together with the occupant (200) sitting thereon is moved opposite to the direction of travel (+x) by a displacement path (Δx3) provided for the longitudinal adjustment of the seat and for the crash-active displacement, in order to increase the total displacement path (ΔxG) available at the crash time in the direction of travel (-x) beyond the available displacement paths (Δx1, Δx2) by the displacement path (Δx3) in addition.

6. Vehicle according to claim 1, **characterized in that** the available free displacement path (Δx3f) within the total displacement path (ΔxG), which is carried out before the crash time counter to the direction of travel (+x), is detected by at least one interior sensor system (S3) which detects the available free space between a rear side of the vehicle seat (100A, 100B) and an object behind the vehicle seat (100A, 100B).

7. Vehicle according to claim 1, **characterized in that** the vehicle seat (100A, 100B) has a seat connection which comprises at least one force-absorption component which absorbs the inertial forces within the total displacement path (ΔxG/t) over time, whereby the vehicle seat (100A, 100B) together with the occupant (200) sitting thereon is braked within the total displacement path (ΔxG/t) over time with an optimized deceleration for reducing the biomechanical load values.

8. Vehicle according to claim 1, **characterized in that** the vehicle seat (100A, 100B) has a seat connection which comprises at least one force output component which outputs forces within the total displacement path (ΔxG/t) over time, whereby the vehicle seat (100A, 100B) with the occupant (200) sitting thereon is decelerated within the total displacement path (ΔxG/t) over time with an optimized acceleration.

9. Vehicle according to at least one of claims 4 to 8, **characterized in that**, via the at least one force-absorption component, forces within the detected total displacement path (ΔxG/t) over time are absorbed as a function of the detected acceleration value by determining a force/displacement characteristic adapted to the acceleration value and to the detected total displacement path (ΔxG/t) over time.

10. Vehicle according to claims 7 and 8, **characterized in that** the at least one force-absorption component is a deformation element and/or a tension rod and/or a torsion rod and the at least one force-absorption component is at least one pyrotechnic system and/or at least one spring system, wherein the at least one component is matched to a mass of the sitting occupant (200), said mass being determined by means of a weight detection sensor system assigned to the vehicle seat (100A, 100B).

11. Vehicle according to claim 1, **characterized in that** the vehicle seat (100A, 100B) is a belt-integral seat (100A) provided with an integrated belt system (10A) or is a vehicle seat (100A) provided with a three-point belt system (10B) attached to a B-pillar (B).

12. Vehicle according to claim 1, **characterized in that** the vehicle seat (100A, 100B) in each case comprises at least one crash-active catching mechanism for the legs and/or arms and/or hands of the occupant (200).

13. Vehicle according to claim 1, **characterized in that** a backrest part (14) of the vehicle seat (100A, 100B), in particular of a swivel seat, has a headrest that crash-actively grips the head of the occupant (200) by means of headrest side bolsters.

14. Vehicle according to claim 10, **characterized in that** the belt system (10A, 10B) of the respective vehicle seats (100A, 100B) comprises a reversible, in particular an electromotive belt tensioner and/or an irreversible, in particular a pyrotechnic belt tensioner.

15. Vehicle according to claim 1, **characterized in that** an interior sensor system (S4) is arranged in the vehicle interior and, by monitoring the occupant (200), determines when a rebound phase in the crash has been reached, so that at this time a further displacement of the vehicle seat (100A, 100B) in the direction of travel (-x) is prevented.

## Revendications

1. Véhicule avec un siège de véhicule (100A, 100B) disposé à l'intérieur du véhicule, auquel est associé un système de protection des occupants, lequel présente au moins un système de capteurs de détection de collision, qui enregistre, en cas de collision, au moins une valeur d'accélération, qui agit sur le véhicule lors de la collision, de telle sorte que des forces d'inertie agissent, en fonction de la valeur d'accélération enregistrée, sur le siège de véhicule (100A, 100B) relié au véhicule et sur l'occupant (200) assis sur le siège de véhicule (100A, 100B), la valeur d'accélération servant à la spécification adaptative à la collision d'au moins une course de déplacement (Δx/t) du siège de véhicule (100A, 100B) permise par au moins un composant d'absorption de force en fonction du temps, une course de déplacement totale (ΔxG) du siège de véhicule (100A, 100B) dans le sens de la marche (-x) comprenant une course de déplacement (Δx2) supplémentaire uniquement active en collision s'ajoutant dans le sens de la marche (-x) à une course de déplacement (Δx1) du siège de véhicule (100A, 100B) pour le réglage longitudinal du siège dans un système de rails de siège (20), la course de déplacement (Δx2) supplémentaire uniquement active en collision étant obtenue par un agrandissement de l'espace libre disponible dans le sens de la marche (-x) devant le siège de véhicule (100A, 100B) à l'intérieur du véhicule,
**caractérisé en ce que**
le siège de véhicule (100A, 100B) peut coulisser davantage vers l'avant, à partir de la position la plus en avant (xV) de la course de coulissement maximale (Δx1) vers l'avant, après un déblocage dépendant de la collision, sur la longueur de la course de déplacement (Δx2) uniquement active en collision, jusqu'à une position maximale la plus en avant (x0), le siège de véhicule (100A, 100B) étant décliqueté du système de rails de siège (20) après le déblocage dépendant de la collision, après quoi le siège de véhicule (100A, 100B) peut être déplacé dans un dispositif de guidage (30) sur la longueur de la course de déplacement (Δx2) supplémentaire active en collision au-delà de la course de coulissement maximale (Δx1).

2. Véhicule selon la revendication 1, **caractérisé en ce que** l'agrandissement de l'espace libre disponible en plus devant le siège de véhicule (100A, 100B) dans le sens de la marche est obtenu par la suppression d'un système de coussin de sécurité gonflable de collision frontale dans un tableau de bord (1) du véhicule réduit dans le sens opposé au sens de la marche (+x).

3. Véhicule selon la revendication 1, **caractérisé en ce que** le véhicule comprend, au moins côté frontal, des structures adaptatives, en particulier télescopiques, actives en collision, qui réduisent la valeur d'accélération.

4. Véhicule selon la revendication 1, **caractérisé en ce qu'**une course de déplacement (Δx1f, Δx2f) libre disponible dans la course de déplacement totale (ΔxG) est détectée par au moins un système de capteurs d'habitacle (S1, S2), qui détecte l'espace libre disponible entre un côté avant du siège du véhicule (100A, 100B) et le côté du tableau de bord (1) orienté vers le siège du véhicule (100A, 100B).

5. Véhicule selon la revendication 1, **caractérisé en ce que** le système de capteurs de détection de collision prédit un accident situé avant un moment de collision (pré-collision) et/ou détecte un accident se produisant au moment de la collision, de telle sorte que le siège de véhicule (100A, 100B) soit déplacé avec l'occupant (200) assis, sur la longueur d'une course de déplacement (Δx3) prévue pour le réglage longitudinal du siège et pour le déplacement actif en collision, avant le moment de la collision dans le sens opposé au sens de la marche (+x), pour agrandir la course de déplacement totale (ΔxG) disponible au moment de la collision dans le sens de la marche (-x) avec la longueur de la course de déplacement (Δx3) en plus des courses de déplacement (Δx1, Δx2) disponibles.

6. Véhicule selon la revendication 1, **caractérisé en ce que** la course de déplacement (Δx3f) libre disponible dans la course de déplacement totale (ΔxG), qui est effectuée avant le moment de la collision dans le sens opposé au sens de la marche (+x), est détectée par au moins un système de capteurs d'habitacle (S3), qui détecte l'espace libre disponible entre un côté arrière du siège de véhicule (100A, 100B) et un objet derrière le siège de véhicule (100A, 100B).

7. Véhicule selon la revendication 1, **caractérisé en ce que** le siège de véhicule (100A, 100B) présente une liaison de siège, qui comprend au moins un composant d'absorption de force, qui absorbe les forces d'inertie dans la course de déplacement totale (ΔxG/t) par rapport au temps, moyennant quoi le siège de véhicule (100A, 100B) avec l'occupant (200) assis est freiné dans la course de déplacement totale (ΔxG/t) par rapport au temps avec un ralentissement optimisé pour diminuer les valeurs de charge biomécaniques.

8. Véhicule selon la revendication 1, **caractérisé en ce que** le siège de véhicule (100A, 100B) présente une liaison de siège, qui comprend au moins un composant de dégagement de force, qui dégage des forces dans la course de déplacement totale (ΔxG/t) par rapport au temps, moyennant quoi le siège de véhicule (100A, 100B) avec l'occupant (200) assis est ralenti dans la course de déplacement totale (ΔxG/t) par rapport au temps avec une accélération optimisée.

9. Véhicule selon au moins une des revendications 4 à 8, **caractérisé en ce que** des forces sont absorbées par le biais de l'au moins un composant d'absorption de force dans la course de déplacement totale (ΔxG/t) détectée par rapport au temps en fonction de la valeur d'accélération détectée par la définition d'une caractéristique force/course adaptée à la valeur d'accélération et à la course de déplacement totale (ΔxG/t) détectée par rapport au temps.

10. Véhicule selon les revendications 7 et 8, **caractérisé en ce que** l'au moins un composant d'absorption de force est un élément de déformation et/ou une barre de traction et/ou une barre de torsion et l'au moins un composant d'absorption de force est au moins un système pyrotechnique et/ou au moins un système de ressort, l'au moins un composant étant adapté à une masse de l'occupant (200) assis, qui est déterminée au moyen d'un système de capteurs de détection de poids associé au siège de véhicule (100A, 100B).

11. Véhicule selon la revendication 1, **caractérisé en ce que** le siège de véhicule (100A, 100B) est un siège à système de retenue au siège (100A) pourvu d'un système de ceinture (10A) intégré ou un siège de véhicule (100A) pourvu d'un système de ceinture trois points (10B) accroché à une colonne B (B).

12. Véhicule selon la revendication 1, **caractérisé en ce que** le siège de véhicule (100A, 100B) comprend respectivement au moins un mécanisme de retenue actif en collision pour les jambes et/ou les bras et/ou les mains de l'occupant (200).

13. Véhicule selon la revendication 1, **caractérisé en ce qu'une** partie dossier (14) du siège de véhicule (100A, 100B), en particulier d'un siège pivotant, présente un appui-tête, qui enveloppe la tête de l'occupant (200) de manière active en collision au moyen de joues latérales d'appui-tête.

14. Véhicule selon la revendication 10, **caractérisé en ce que** le système de ceinture (10A, 10B) des sièges de véhicule (100A, 100B) respectifs comprend/comprennent un prétendeur réversible, en particulier électromoteur, et/ou un prétendeur irréversible, en particulier pyrotechnique.

15. Véhicule selon la revendication 1, **caractérisé en ce qu'un** système de capteurs d'habitacle (S4) est disposé à l'intérieur du véhicule, lequel détermine, par la surveillance de l'occupant (200), quand une phase de contre-coup est atteinte pendant la collision, de telle sorte qu'un déplacement supplémentaire du siège de véhicule (100A, 100B) dans le sens de la marche (-x) soit empêché à ce moment.
